# EUROPEAN PATENT SPECIFICATION

(11) **EP 4 188 566 B1**
(45) Date of publication and mention of the grant of the patent: **25.06.2025**
(21) Application number: 21854182.9
(22) Date of filing: 03.08.2021
(51) Int. Cl.: A63F 13/24, A63F 13/22, G05G 9/047, G06F 3/02, G06F 3/0346, A63F 13/211

(54) **GAME CONTROLLER APPARATUS AND METHOD**
SPIELSTEUERUNGSVORRICHTUNG UND -VERFAHREN
APPAREIL DE TYPE CONTRÔLEUR DE JEU ET PROCÉDÉ

(30) Priority: 03.08.2020 US 202063060633 P
(43) Date of publication of application: 07.06.2023
(73) Proprietor: Sheel, LLC, Edmonds, WA 98104 (US)
(72) Inventor: MCLEAN, Aehdan Patrick, Edmonds, Washington 98026 (US)
(74) Representative: Marks & Clerk LLP
(86) International application number: PCT/US2021/044384
(87) International publication number: WO 2022/031732

(56) References cited:
- EP-A1- 2 902 082
- US-A1- 2006 077 177
- US-A1- 2011 148 667
- US-A1- 2011 163 957
- US-A1- 2019 009 172
- US-A1- 2019 009 172
- US-A1- 2019 308 110
- US-A1- 2020 111 635
- US-B1- 10 591 948
- US-B2- 9 547 380

## Description

### BACKGROUND OF THE INVENTION

### Field of Invention

This disclosure introduces a new structure for a controller that can be used for games, drones or other virtual or physical objects. The controller can also include two controllers, one in each hand, with improved components that enable improved impact on a user's hands while using the controllers.

### Description of the Related Art

The use of computer interface devices over long periods of time are known to cause injuries commonly referred to as repetitive strain injuries. Common types of repetitive strain injuries include carpal tunnel syndrome, bursitis, and tendonitis. Each of these afflictions may affect the hands of people after they manipulate a device over time. These afflictions are so common that many products have been developed that attempt to relieve or reduce stresses associated with the use of specific types of equipment. For example, individuals that use a keyboard to type or enter data into a computer that develop a repetitive strain injury may purchase an "ergonomic" keyboard that is designed to reduce strain associated with typing.

Over the last several decades, the field of computer gaming has grown tremendously. In fact, some people that play these games (i.e. gamers) use game controllers as a part of their job and other gamers compete in competitions to win prize monies that range from thousands to millions of dollars. Game developers use game controllers to test that their games work as intended and this process of testing games may consume many hours. Similarly, individuals that compete in gaming competitions often spend dozens or even hundreds of hours per week playing a game using game controllers. Typically, these currently available game controllers include few parts that are made using injection molding. Furthermore, currently available game controllers are not designed to minimize stress to the hands or arms of individuals using them and this can lead to repetitive stress injuries.

Conventional game controllers also have other limitations that limit their utility. Some types of game controllers are designed to be manipulated by two different hands of a person and include a left side and a right side, where each hand may manipulate joysticks or buttons. A second type of game controller is a joystick that may include one or more buttons, where one hand holds the joystick and another hand manipulates the joystick to control a game. Other types of game controllers may be disconnected from a gaming device and be operated separately by different people or different hands of a person. For example, the Nintendo Switch includes two gaming controllers.

Furthermore, conventional game controllers are built as a one size fits all format. Persons with very small or very large hands that use conventional game controllers often cannot control games as well as someone with a hand size that best fits a particular game controller.

Many of the types of games played today simulate warfare or some other activity that is performed using a device that has a handle. For example, the handle of a gun, a sword, or a hammer have a shape that may be slightly rounded or oval. Such shapes naturally fit into the hand of a person. None of the gaming controllers available today, however, come in a shape that is similar to the handle of a hammer or a gun. Furthermore, none of the game controllers available today come in a shape where a person can easily grasp the controller with two fingers of a hand while three other fingers of that person's hand can be used to manipulate game control buttons, triggers, or joysticks.

What are needed are new types of game controllers that are available in multiple sizes or that are built in configurations that can be adjusted to conform to the size of a person's hand in some way, for example by adjusting the position of an index finger control. Such game controllers could include ergonomic features, and that can be grasped by one or two fingers of a person while allowing multiples fingers. For example, a game controller design may allow a user to use at least three fingers manipulate controls of a game controller.

US10591948 describes a control system for a rotorcraft, US2011/148667 discusses an intelligent joystick, US2019/009172 proposes an operation apparatus mountable to one hand of a user, US9547380 describes a multi-degrees-of-freedom hand controller and EP2902082 discusses a video games input device

### SUMMARY

The Disclosed herein is an improved controller that provides less wear and a user's hands and that can control object better. According to the present invention, a controller is provided in accordance with claim 1. Further aspects and preferred embodiments are set out in claim 2 to 15.

The controller may include a grip framework that contains various input components, a thumb-stick configured on a top portion of the grip framework, the thumb-stick operable to be controlled by a user's thumb and an analog stick configured on a front portion of the grip framework. The analog stick can be configured to be operated by a user's index finger and configured in a box cage and floats. The user's index finger can control the box cage containing the analog stick backwards relative to the grip framework to control a z axis movement of a virtual object or a physical object. The analog stick can be manipulated to control movement in an x and y axis. The controller can include a trigger configured on the front portion of the grip framework. The trigger can be configured to be operated by a middle finger

The controller can be operable to control one of a virtual object or a physical object. For example, a drone could be controlled in which the controller includes the appropriate protocols and communication components for sending and receiving signals from a drone. For example, the Micro Air Vehicle Communication Protocol could be used for drone communication and control.

The controller can include at least one button configured on a top portion of the grip framework. Each of the at least one button can have a surface that is cupped inwardly to provide more surface area for the at least one button. Each of the at least one button on the top portion of the grip framework can be reachable from a user's thumb.

The trigger and the analog stick can be floating in that users cannot use the trigger or the analog stick to hold the controller. A lower portion of the grip framework an include components or a structure that cause the user to hold the controller by one or more of a pinky finger and a ring finger. This structure reduces the wear and tear and a user's hand when making controlling movements that are often repetitive.

The disclosure further introduces a pair of controllers. The pair of controllers can include a first controller having a first grip framework that contains various input components, a first thumb-stick configured on a first top portion of the first grip framework, the first thumb-stick operable to be controlled by a user's thumb of a first hand of the user and a first analog stick configured on a first front portion of the first grip framework. The first analog stick can be configured to be operated by a user's index finger of the user's first hand and configured in a first box cage. The user's index finger of the user's first hand can control the first box cage containing the first analog stick backwards relative to the first grip framework to control a z axis movement of a first virtual object or a first physical object. The first analog stick can be manipulated to control movement in an x and y axis. The first controller can include a first trigger configured on the first front portion of the first grip framework. The first trigger can be configured to be operated by a middle finger of the user's first hand.

The pair of controllers can include a second controller having a second grip framework that contains various input components, a second thumb-stick configured on a top portion of the second grip framework, the second thumb-stick operable to be controlled by a user's thumb of the user's second hand, and a second analog stick configured on a second front portion of the second grip framework. The second analog stick can be configured to be operated by a user's index finger of the user's second hand and configured in a second box cage. The user's index finger of the user's second hand can control the second box cage containing the second analog stick backwards relative to the second grip framework to control a z axis movement of a second virtual object or a second physical object. The second analog stick can be manipulated to control movement in the x and y axis. The second controller can include a second trigger configured on the second front portion of the second grip framework. The second trigger is configured to be operated by a middle finger of the user's second hand.

The pair of controllers enables a user to aim two different objects simultaneously using one or more of the first analog stick and the second analog stick. The pair of controllers also enables a user to control two different objects simultaneously using one or more of the first analog stick and the second analog stick. At least one of the first analog stick and the second analog stick can be used to define a cutting plane of a cutting implement like a sword. At least one of the first controller and the second controller are used to provide third person over a shoulder control in which a camera angle is used behind a first person's view.

An internal electronic board can be a PCB board known to those of skill in the art which are configured to be mapped to the respective input components and the shape of the controller(s). Note that the figures disclosed herein can disclose other physical shapes, relationships and so forth for the controller(s) that can support additional description of the disclosed features.

### BRIEF DESCRIPTION OF THE DRAWINGS

FIG. 1 illustrates a perspective view of the controller of FIG. 1 from a left-back side of the controller.
FIG. 2 illustrates a perspective view of the controller of FIG. 1 from a right backside of the controller
FIG. 3 illustrates a perspective view of the controller of FIG. 1 from a left-front side of the controller.
FIG. 4 illustrates a perspective view 400 of the controller of FIG. 1 from a right-front side of the controller.
FIG. 5 illustrates a perspective view 500 of the controller of FIG. 1 from an offset backside of the controller.
FIG. 6 illustrates a perspective view 600 of the controller of FIG. 1 from a an offset bottom side of the controller.
FIG. 7 illustrates a perspective view 700 of the controller of FIG. 1 from a left side of the controller.
FIG. 8 illustrates a perspective view 800 of the controller of FIG. 1 from a right side of the controller.
FIG. 9 illustrates a perspective view 900 of the controller of FIG. 1 from a top side of the controller.
FIG. 10 illustrates a perspective view 1000 of the controller of FIG. 1 from a bottom side of the controller.
FIG. 11 illustrates perspective views of a left-hand game controller and a right-hand game controller.
FIG. 12 illustrates a second set of perspective views of a left-hand gaming controller.
FIG. 13 illustrates various perspective views of a controller (with annotations) that were drafted using a computer aided design system.
FIG. 14 illustrates two different perspective views of thumb controls of a gaming controller.
FIG. 15 illustrates perspective view of an index finger control and parts that may be included within such an index finger control.
FIG. 16 illustrates a cross-sectional view of a game controller index finger sub-assembly.
FIG. 17 illustrates a similar cross-sectional view of the index finger sub-assembly of FIG. 16.
FIG. 18 illustrates another cross-sectional view of the index finger sub-assembly of FIGS 15 and 16.
FIG. 19A shows the index control joystick button in a fully extended position and shows the index control second assembly in a fully extended position.
FIG. 19B shows the index control button in partially withdrawn position when the index control second assembly is in the fully extended position.
FIG. 19C show that embodiments of the present disclosure where an index finger control may be moved from a first position to a second position that spans nearly half of the depth of the a controller.
FIG. 20 illustrates several different perspective views of a game controller that include a ring finger protrusion.
FIG. 21A illustrates parts that may be used to build a thumb joystick of the present disclosure.
FIG. 21B illustrates several different perspective views of a trigger assemble consistent with the present disclosure.
FIG. 22 illustrates a computing system that may be used to implement an embodiment of the present invention.

### DETAILED DESCRIPTION

A pair of controllers each have ergonomically shaped to fit the hands of users. These controllers may allow a user to adjust the position of an index finger control. The pair of controllers can be used to control a virtual object or physical object such as a drone. The index finger analog sticks and the triggers are configured to a user to grip each controller in a different hand using one or both of a pinky finger and a ring finger. The configuration of each controller enables an open thumb, index and middle finger for operations and a closed ring finger and pinky finger to hold each of the controllers. Use of the separate finger analog sticks enables aiming simultaneously at different objects or control of a cutting member or some other controls. The index finger analog sticks also can be moved backwards towards the controller for z-axis object control.

Such apparatus may also be used by a single hand of a person, where the game controller may be held using one or two fingers of the person's hand and where several other fingers of the person may be used to manipulate controls on one or more surfaces of the game controller. Such game controllers may also include features that are interchangeable in a manner that may update, change, or affect the utility of the game controllers. Furthermore, such game controllers may help prevent or relieve repetitive stress injuries or increase the utility of the game controller in new ways.

In certain instances, a bottom portion of a game controller may be part of or permanently attached to a top portion of the game controller. In such instances, the shape of the game controller may conform to features of the human hand. The shape of a handle may be curved to conform to the shape of the palm of a user. The handle of a game controller may also include a ridge that causes a center part of the game controller to have a greater thickness that a bottom part of the game controller handle. This could allow a person to use their pinky to grab the bottom part of the game controller handle as their ring finger grabs a wider part of the game controller handle. Such game controllers may help prevent or relieve repetitive stress injuries or increase the utility of the game controller in various ways. Other ergonomic features may allow a user to adjust the position of an index finger control. Handles of such game controllers may have or include a rounded or oval shape that fits into the hand of a person naturally.

In one example, a game controller may include a grip that can be grabbed by the pinky and ring finger of a person's hand. As mentioned above, a game controller may include various different types of controls that may include joysticks, triggers, buttons, or combinations thereof. One configuration may include a joystick that may be manipulated with the thumb of a person, a second control that may be manipulated by the index finger of the person's hand, and a trigger that may be actuated by the middle finger of the person's hand. A person playing a game may also hold a first game controller in their right hand and hold a second game controller in their left hand.

In certain instances, a set of controls may also be disposed on surfaces next to any of the person's fingers. For example, a series of buttons or rocker switches may be located next to the thumb control. These buttons or rocker switches may also include other features that allow a user to easily feel and identify a particular button rocker switch.

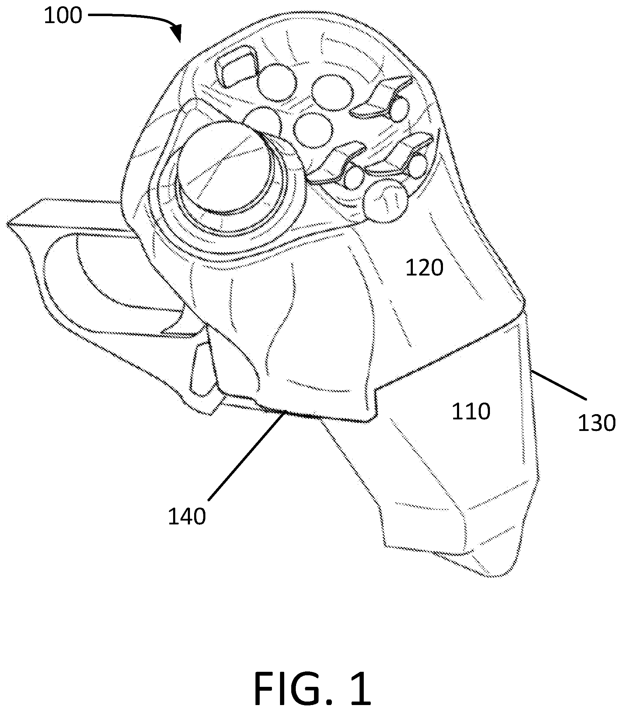

FIG. 1 illustrates a perspective view of the controller of FIG. 1 from a left-back side of the controller. FIG. 1 illustrates a controller that may be operated by the right hand of a person from a perspective of a left-back side of the controller. FIG. 1 includes a top portion 120 that includes various types of controls and a bottom portion 110 that may be used to hold the controller. The controls included in this top portion 110 may include controls of various sorts (e.g. buttons, push button switches, rocker switches, thumb-controlled joystick, and a trigger). Bottom portion 110 may be gripped by the pinky and ring finger of a user while that user manipulates controls with their thumb, index finger, and middle finger. As mentioned above, a bottom portion 110 controller 100 could be built as an integral part of a top portion of 120 of controller 100.

Item 130 is location of the bottom portion 110 of the game controller 100 that may be shaped to conform to the palm of a user. Notice that at location 130, the bottom portion of the game controller 100 tapers or curves to a smaller cross-sectional area to naturally conform to the palm of the user. Item 140 may be a ridge that results in a part of the game controller have a greater cross-sectional area than a cross-sectional area at location 130 of game controller 100. These shapes at locations 130 and 140 of game controller 100 of FIG. 1 may allow a user to grab the game controller at location 130 with their pinky and allow the user to grab the game controller at the ridge 140, allowing the user to more comfortably grab the game controller.

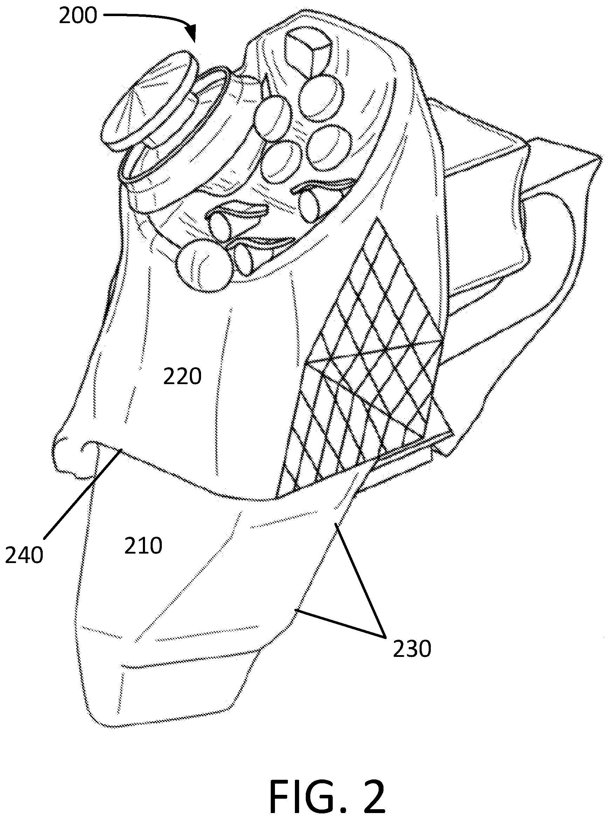

FIG. 2 illustrates a perspective view of the controller of FIG. 1 from a right backside of the controller. This right-backside view 200 of the controller of FIG. 2 includes bottom portion 210 and top portion 220 that may be the same bottom and top portions (110 & 120) of controller 100 of FIG. 1. FIG. 2 also shows the tapered or rounded surface 230 of the lower portion 210 of the game controller discussed above in respect to FIG. 1. FIG. also illustrate ridge 240. Here again the pinky of a user may comfortably grab the bottom portion of the game controller based on the shape of surface 230 and the ring finger of the user may comfortably grab the ridge 240 of game controller 200.

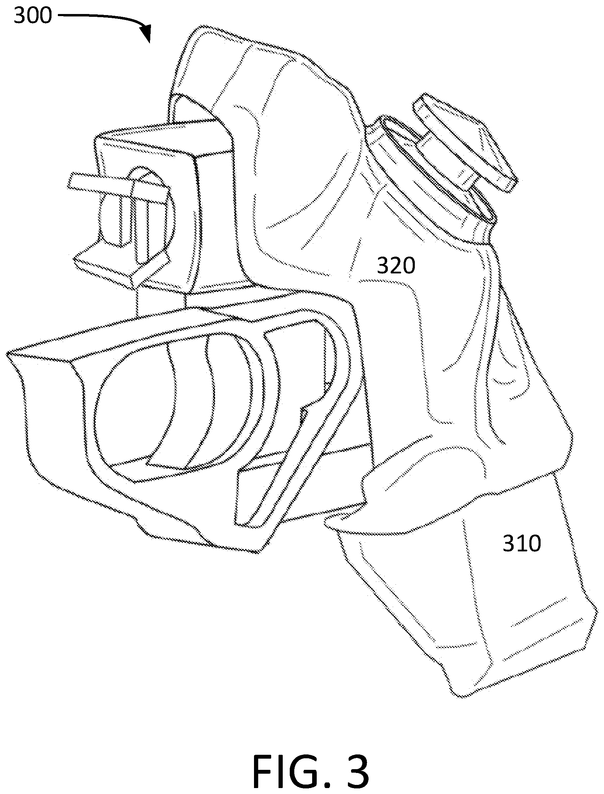

FIG. 3 illustrates a perspective view of the controller of FIG. 1 from a left-front side of the controller. The perspective view 300 of FIG. 3 also includes a top portion 320 that may include controls and a bottom portion 310 that may be used as a grip.

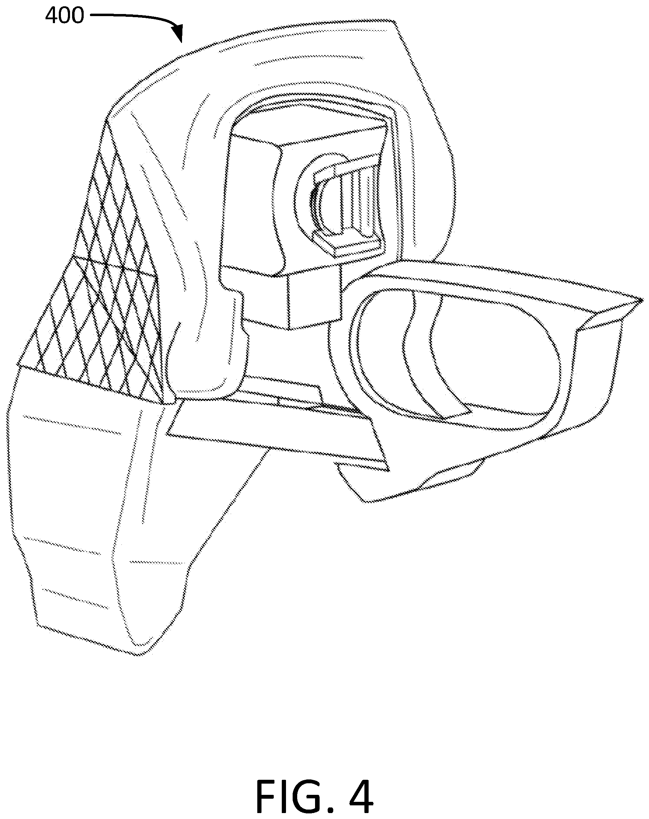

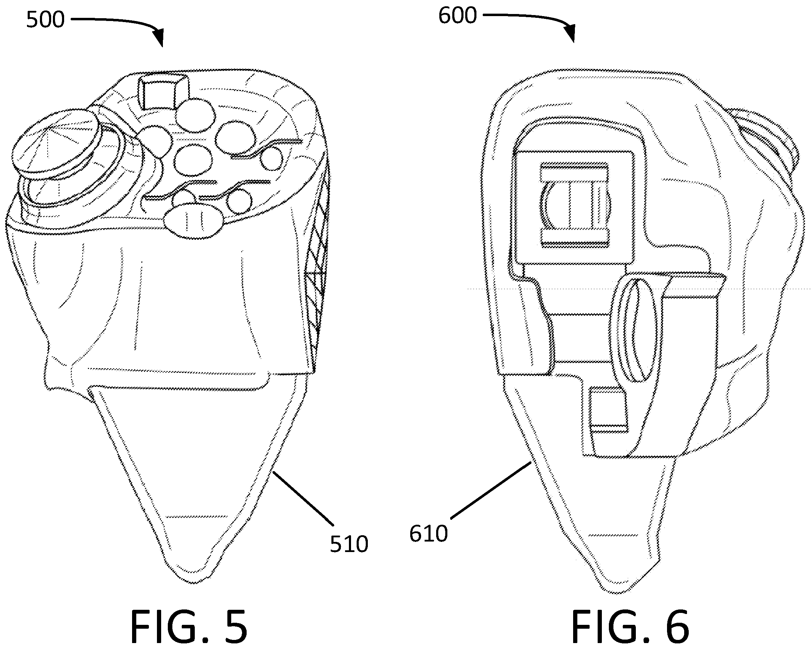

FIG. 4 illustrates a perspective view 400 of the controller of FIG. 1 from a right-front side of the controller. FIG. 5 illustrates a perspective view 500 of the controller of FIG. 1 from an offset backside of the controller. The shape of a handle portion of the controller 500 of FIG. 5 conforms to the shape of a user's hand based on the handle tapering down to a smaller cross-sectional area along location 510 of FIG. 5. FIG. 6 illustrates a perspective view 600 of the controller of FIG. 1 from an offset bottom side of the controller. Like the handle portion of FIGS 1, 2, and 5, the shape of a handle portion of the controller 600 of FIG. 6 conforms to the shape of a user's hand based on the handle tapering down to a smaller cross-sectional area along location 510 of FIG. 5.

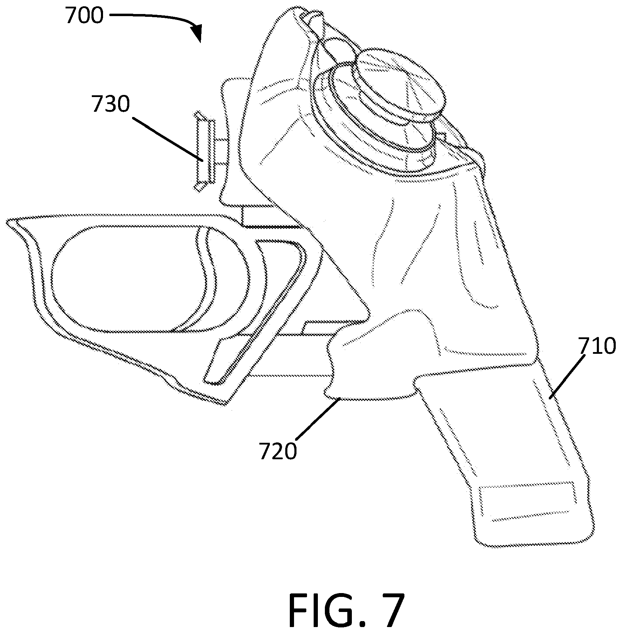

FIG. 7 illustrates a perspective view of the controller of FIG. 1 from a left side of the controller. Controller 700 of FIG. 7 includes tapered handle 710, ridge 720, and index finger button 730. Here the tapered handle 710 and ridge 720 may include different cross-sectional areas allowing a user to more comfortably grab, hold, and use game controller 700.

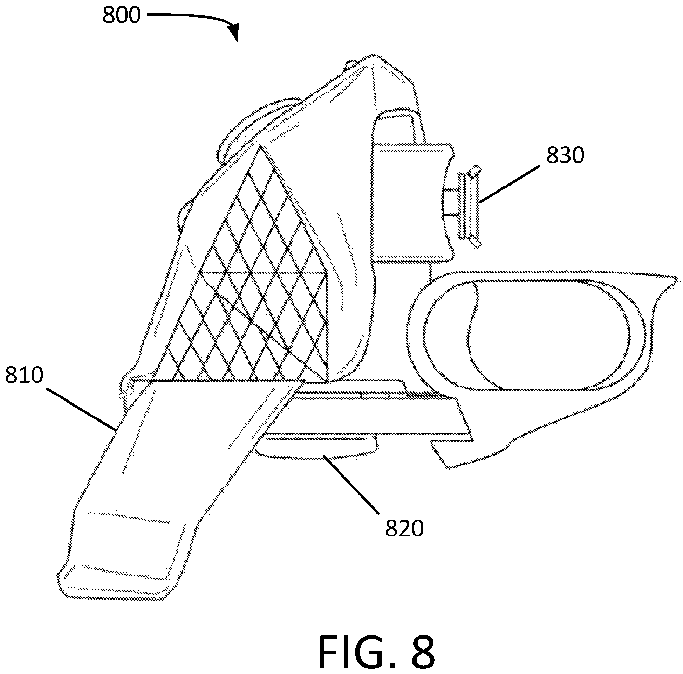

FIG. 8 illustrates a perspective view of the controller of FIG. 1 from a right side of the controller. Controller 800 of FIG. 8 includes tapered handle 810, ridge 820, and index finger button 830. Here the tapered handle 810 and ridge 820 may include different cross-sectional areas allowing a user to more comfortably grab, hold, and use game controller 800.

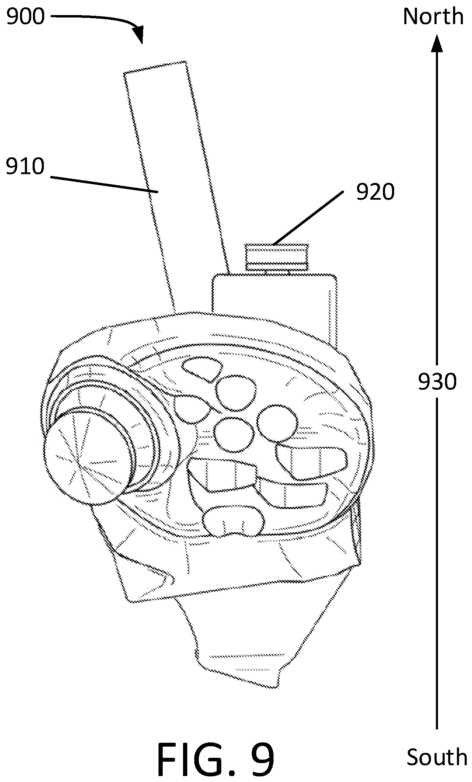

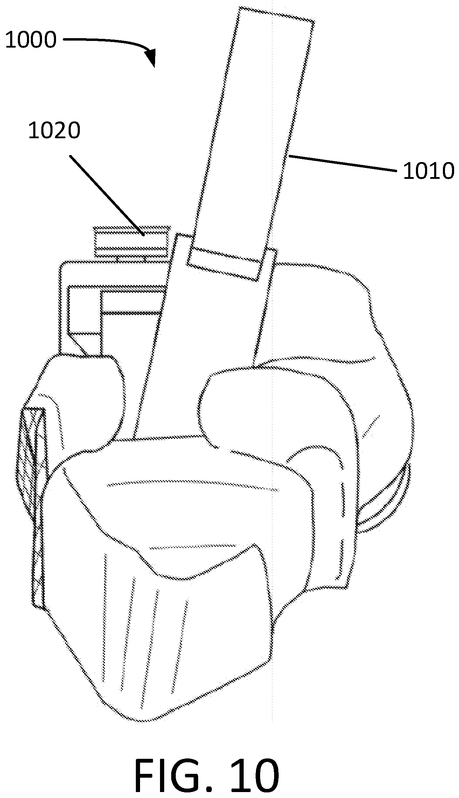

FIG. 9 illustrates a perspective view of the controller 900 of FIG. 1 from a top side of the controller 900. FIG. 10 illustrates a perspective view of the controller 1000 of FIG. 1 from a bottom side of the controller 1000. Each of FIGS 9 and 10 illustrate a trigger assembly (910 in FIG. 9 & 1010 in FIG. 10) points in a direction that is off center. Each of the controllers in FIGS 9 & 10 are controllers designed to be used by the right hand of a user, where the respective trigger assemblies (910 & 1010) point in a leftward direction. Each of FIGS 9 & 10 also include index finger control buttons (920 in FIG. 10 and 1020 in FIG. 10). Each of these buttons face forward relative to a center line (or the North/South line 930 of FIG. 9) of a respective controller 900/1000. In an instance when button 920 of FIG. points in a direction parallel to North/South line 930 of FIG. 9, trigger assembly 910 is pointed in a direction of a slightly to the left of North (e.g. Westerly by 15 to 20 degrees).

Similar controllers made to be used by the left hand of a user may have a trigger assembly that points toward the right of a center line of a left-handed controller. By moving the trigger slightly off center and by keeping the index finger control button parallel to a reference line (e.g. the North/South line 930 of FIG. 9), stress felt in the hand of a user may be minimized.

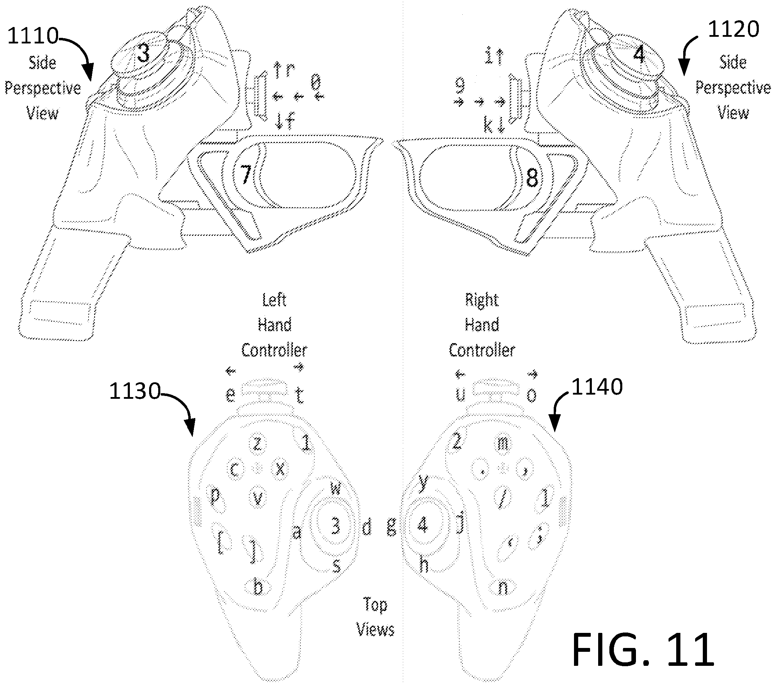

FIG. 11 illustrates perspective views of a left-hand game controller and a right-hand game controller. FIG. 11 includes a side perspective view 1110 of the left-hand game controller, a side perspective view 1120 of the right-hand game controller, a top view 1130 left-hand game controller, and a top view 1140 of the right-hand game controller. FIG. 11 includes many different controls that may be actuated to provide command or text input to a gaming system.

The side perspective view 1110 of the left-hand controller of FIG. 11 include a thumb joystick-button 3, an index finger joystick-button (identified by the number zero 0 and characters r and f), and a dual stage trigger 7. (Many of the identifiers in FIG. 11 identify numbers or characters that may be provided to a gaming system by manipulating the controls in certain ways. Depressing the joystick button 3 may cause the left-hand game controller to send the number 3 to a gaming system. The dual stage trigger 7 may send either the number 5 or the number 7 to the gaming system based on how much the trigger is depressed. The index finger joystick-button 0 may send the number zero 0, the letter r, or the letter f to the gaming system when the joystick button 0 is manipulated. Pressing the index finger joystick 0 may cause the number zero to be sent to the gaming system, rotating the index finger button 0 upward may send the letter r to the gaming system, and rotating the index finger button 0 downward may send the letter f to the gaming system.

The top view of the left-hand controller of FIG. 11 shows some of the same controls and some additional controls of the left-hand controller. FIG. 11 indicates that rotating the index finger joystick-button to the left and right will respectively result in the letters e and t being sent to the gaming controller. The thumb joy-stick button 3 may also be rotated to up, down, to the left, and to the right to respectively send the letters w, s, a, and d to the gaming controller. Other buttons that may be actuated by a user's left thumb may result in different numbers being sent to the gaming controller (e.g. the number 1 or various characters that include: c, z, v, x, b, left bracket, and right bracket.

The side perspective view 1120 and the top view 1140 of the right-hand controller of FIG 11 include similar controls that may be used to provide other inputs to a gaming system. Here again a thumb joystick button 4, an index finger control (identified by the number 9 and characters i and k), a dual trigger 8, and other buttons may be actuated to send numbers or characters to a gaming system. Numbers and characters that the right hand controller of FIG. 11 may send to a gaming system include numbers 2, 4, 6, 8, & 9 and characters g, h, i, j, k, l, m, n, o, u, y, quotation symbol, backslash, colon, comma, and period. Depressing state trigger 8 may either send the number 6 or the number 8 to the gaming system based on how much the trigger is depressed.

While controllers consistent with the present disclosure may be used to provide numbers and characters to a gaming system, these controls may also be used to control motion of items in a game or may control when a gun in a game fires.

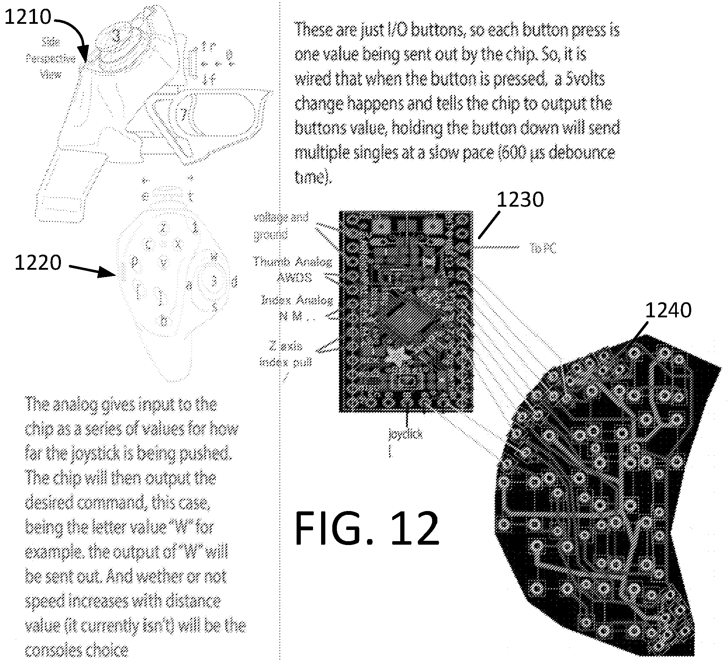

FIG. 12 illustrates a second set of perspective views of a left-hand gaming controller. FIG. 12 includes a side perspective view 1210 and a top view 1220 of the left-hand gaming controller. Here again various controls of the controller are mapped to different numbers or characters as discussed in respect to the left-hand gaming controller of FIG. 11. FIG. 12 also illustrates an electronic control board 1230 that may receive inputs from a gaming controller. Item 1240 of FIG. 12 illustrates a printed circuit board (PCB) that may be used to make control board 1230. This control board 1230 may receive analog or digital inputs from the various controls. Control board 1230 may receive signals from a joystick or a button, associate an input with data that should be sent to a gaming system, and the control board may send appropriate data to the gaming system based on the received signals. The control board 1230 of FIG. 12 may send data to a gaming system using any type of interface (e.g. an analog interface, a digital interface, a universal serial bus interface - USB, a wireless interface - such as Bluetooth, WI-FI, MAVlink, or another interface).

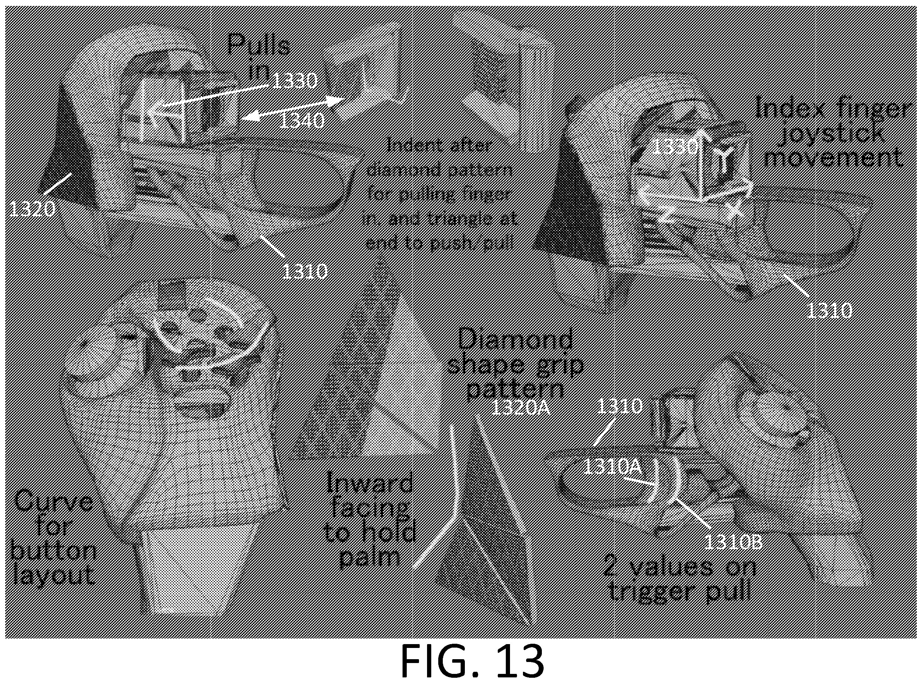

FIG. 13 illustrates various perspective views of a controller (with annotations) that were drafted using a computer aided design system. FIG. 13 includes a right-hand gaming controller that includes trigger assembly 1310. Trigger assembly 1310 may be in a fixed position relative to a handle or center line of the gaming controller as discussed in respect to FIG. 9. FIG. 13 illustrates trigger assembly 1310 in several different perspectives, in one of those perspectives two trigger pull values 1310A and 1310B are illustrated. As mentioned above, depressing the trigger by different amounts could send different commands to the gaming controller. FIG. 13 also identifies that the trigger may have a two-step 1310A/1310B or two value/level pull. Each of this two-step 1310A/1310B trigger may provide different functionality. For example, depressing the switch to a first level may result in a game character shooting a gun in a single action (one pull-one shot, bolt action, or semi-automatic) configuration. Depressing the switch to the second level may result in the game character shooting the gun in a burst mode or in a full automatic mode (e.g two or more shots per one pull or where the gun continues to fire as long as the switch is depressed).

FIG. 13 also includes a side grip 1320/1320A. Note that grip 1320 may include a diamond shape pattern that may help keep the game controller from slipping in the hand of a user. These grips 1320/1320A may have a shape that has an inward facing surface that fits the palm of the user. FIG. 13 also shows that an index finger joystick button 1330 may be moved from an extended position to a "pull in" position along the left facing arrow. This index finger joystick 1330 may be configured to also move up/down or from left to right. Index finger joystick 1330 may thus move along the X, Y, and Z axis illustrated in FIG. 13. This index finger joystick button 1330 may include various thumb controls (e.g. a rotatable joystick, and other buttons).

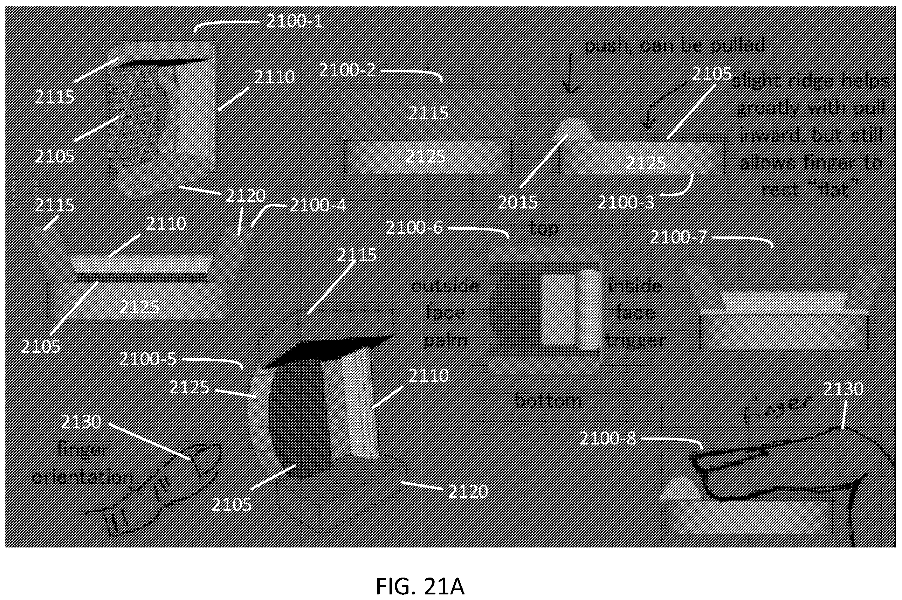

Item 1340 of FIG. 1 may be a button that include features that help adjust a position of the button. These features may allow a user to move index finger joystick button 1330 to various positions based on an indent and a triangular shaped end portion of sliding feature 1340 as discussed in respect to FIG. 21A.

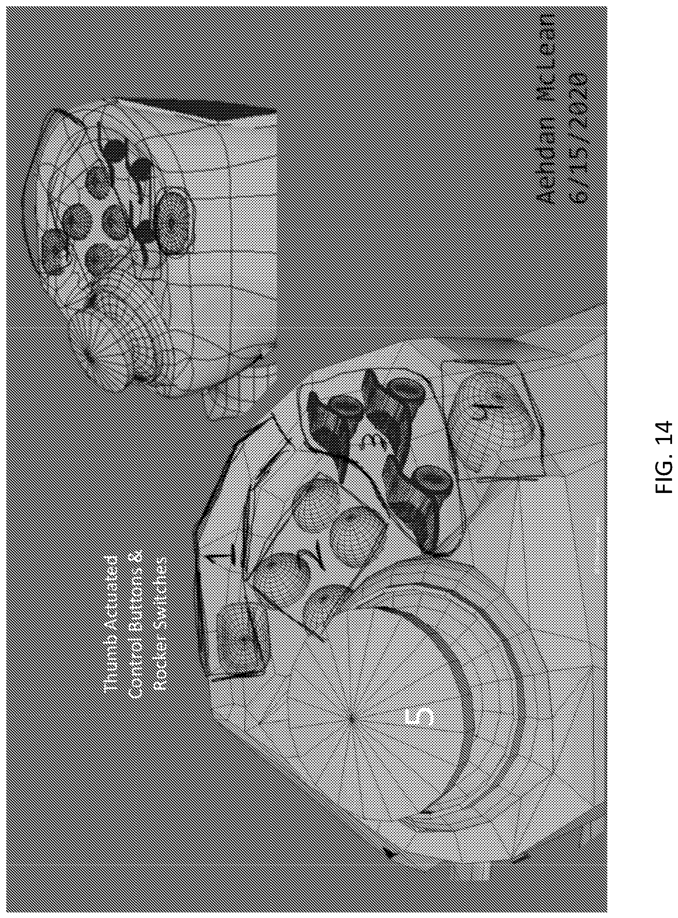

FIG. 14 illustrates two different perspective views of thumb controls of a gaming controller. FIG. 14 thumb actuated control buttons and rocker switches. FIG. 14 includes control button 1, center control buttons 2, rocker control buttons 3, control button 4, and joystick button 5. These buttons may provide commands or text information to a gaming system as previously discussed. Rocker switches 3 have a shape that allows them to be identified by a user without the user having to look at the controller and other switches, such as switch 4. This may be because switch 4 is located on an edge or side surface of the controller that makes it easy to identify by feel. The rocker switches 3 have a wave like shape, where the thumb of a person may rest in a dipped portion that that wave like shape.

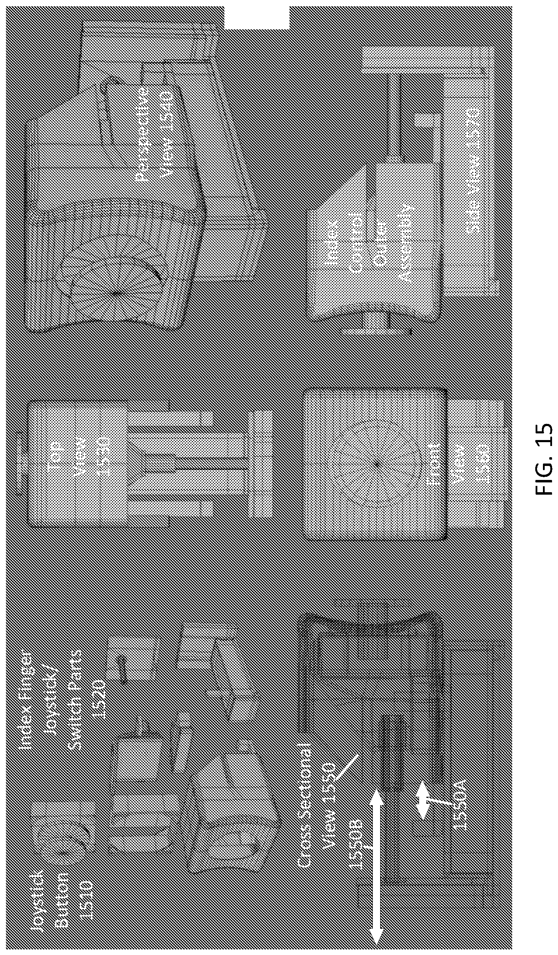

FIG. 15 illustrates perspective view of an index finger control and parts that may be included within such an index finger control. Here again this index finger control may include a joystick button 1510. FIG. 15 includes a view that shows a set of index finger joystick switch parts 1520, a top view 1530, left-front perspective view 1540, a cross-sectional view 1550, a front view 1560, and a side view 1570 of the index finger control. The various parts of the index finger control of FIG. 15, once assembled may allow the control to include two different moving portions that allow the index finger control to be moved forward or backward in an extensible telescoping like motion. These two different moving portions may overlap when retracted and this may result in the joystick button sub-assembly 1510/1520 portion being nearly completely contained within a second portion of the telescoping index finger control. FIG. 15 includes two different double arrowed lines 1550A & 1550B, one indicating a path along which a first portion of the index finger control may move along. This first portion of the control may move a sub-assembly of the index finger joystick button to be moved along the lower arrow 1550A of FIG. 15. A second portion of the index finger control may move along the path of the upper arrow 1550B of FIG. 15.

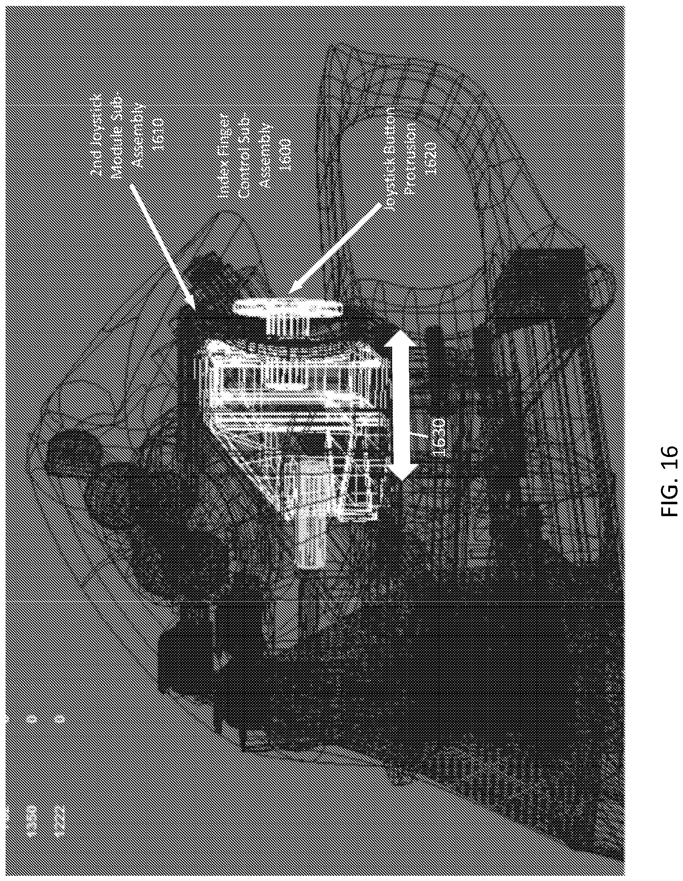

FIG. 16 illustrates a cross-sectional view of a game controller index finger sub-assembly. The white assembly of FIG. 16 is a sub-assembly 1600 that allows a button portion of the joystick button 1620 to be moved back and forth relative to other portions of a movable index finger control. The double pointed arrow 1630 of FIG. 16 identifies the direction along which the white sub-assembly 1600 may be moved along. Note also that the joystick button protrudes away from a second joystick 1610 sub-assembly as indicated by the single pointed arrow 1620 of FIG. 16

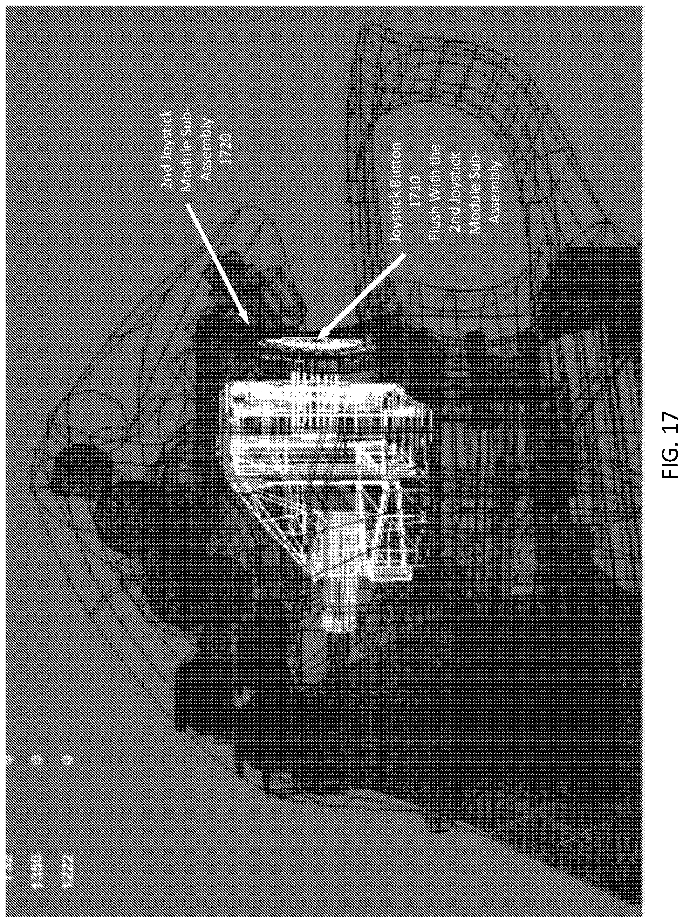

FIG. 17 illustrates a similar cross-sectional view of the index finger sub-assembly of FIG. 16. Note that the joystick button 1710 of FIG. 17 is flush or nearly flush with a second sub-assembly 1720 of the index finger controller as indicated by the single pointed arrows of FIG. 17.

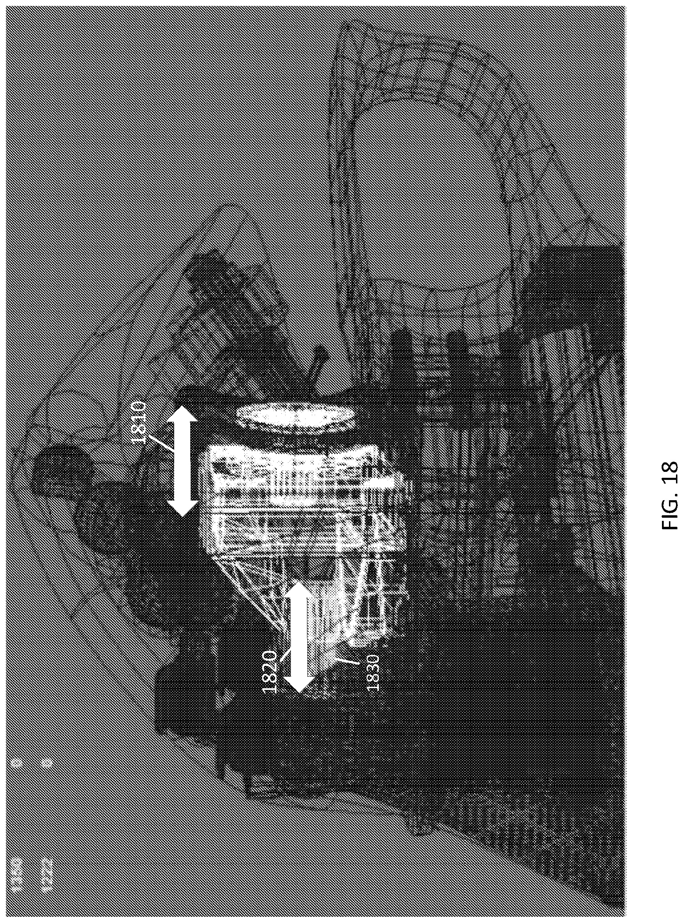

FIG. 18 illustrates another cross-sectional view of the index finger sub-assembly of FIGS 15 and 16. Both the first and the second sub-assembly of the index finger control may move back and forth as illustrated by the arrows 1810 & 1820 of FIG. 18. Note also that shaft 1830 of FIG. 18 moves toward a backside of the controller. As such, the index finger control may move from a position that extends farther from the backside of the controller to a position that is close to the backside of the controller.

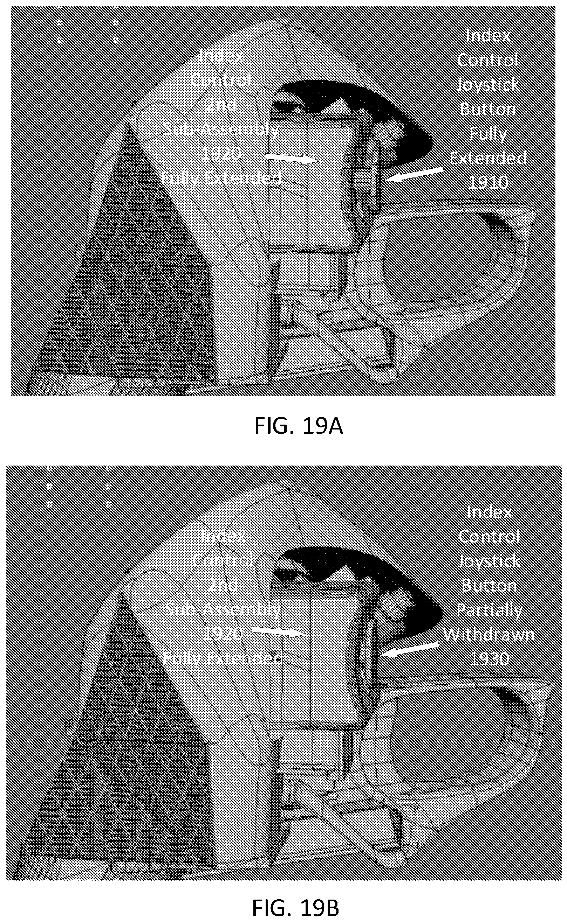

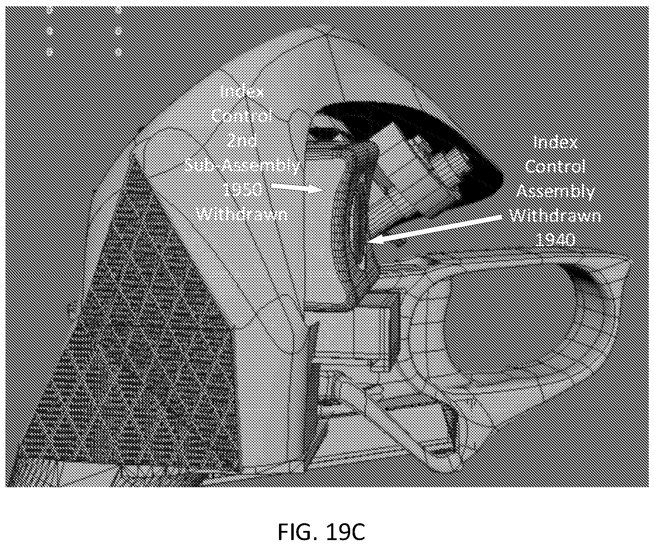

FIGS 19A, 19B, and 19C illustrate similar motions of the various parts of the index finger control of the controller. FIG. 19A shows the index control joystick button in a fully extended position 1910 and shows the index control second assembly in a fully extended position 1920. FIG. 19B shows the index control button in partially withdrawn position 1930 when the index control second assembly is in the fully extended position 1920. FIG. 19C show that embodiments of the present disclosure where an index finger control may be moved from a first position to a second position that spans nearly half of the depth of the controller. FIG. 19C shows the index control assembly in a withdrawn position 1940 and shows the index control second assembly in a withdrawn position 1950. Note that in some positions a joystick button of the index control assembly may protrude more or less from the second index control assembly/sub-assembly. Assemblies of an index control assembly may be referred to as including one or more box cages. Here parts associated with a first portion of the may move with a first set of parts of the index control assembly or independent from other parts of the assembly until the first set of parts reach a first position and the second set of parts may move along with the first set of parts after the first set of parts reach the first position. The index finger control of FIGS 19A - 19C may be moved and locked into place in any position that is comfortable to a particular user. When another user begins using the controller, that other user may adjust the index finger control to a position that is comfortable for them after which this other user may begin using the controller. In another aspect, the index analog is not adjustable for respective users but is fixed in its configuration. While FIGS 19A - 19C illustrate the index finger control moving in a direction along a single axis, the index finger control may also be configured to move along one or two other axis. FIGS. 19A -19C show how the index finger can pull the components in towards the controller for X axis movement. When it is initially being pulled in, the joystick button shown can provide some X and Y axis movement but as the joystick gets withdrawn into the sub-assembly shown, the cage part will hid the analog joystick thus preventing more X,Y axis movement but will still move in the Z axis. Note in FIG. 19C, that the analog joystick button is flush with the surface of the cage of the second control assembly/sub-assembly. As such, in certain embodiments the index finger control may move along an X, a Y, and a Z axis as illustrated in FIG. 13.

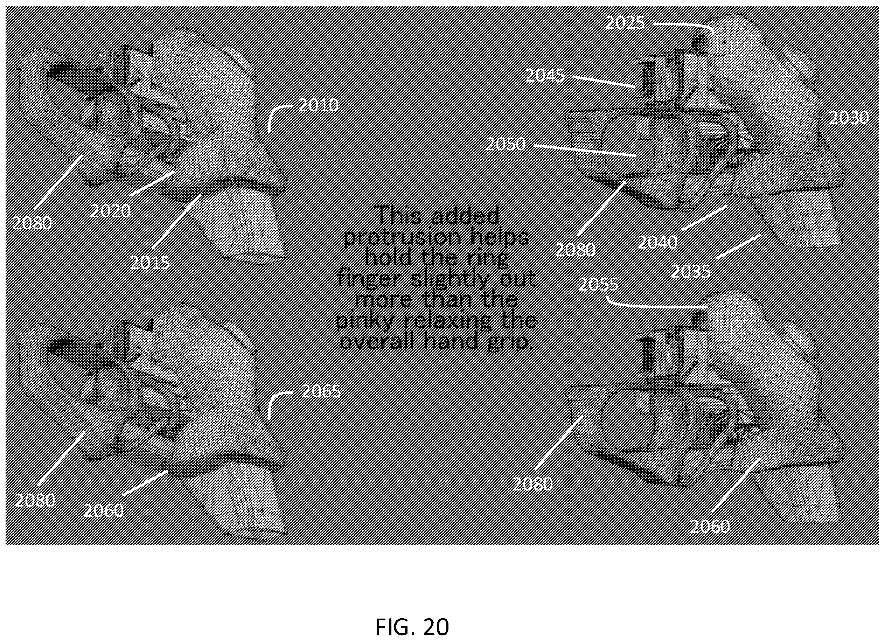

FIG. 20 illustrates several different perspective views of a game controller that include a ring finger protrusion. FIG. 20 includes perspective views 2010, 2025, 2055, and 2065 of a game controller. Perspective view 2010 highlights portions 2015 and 2020 of a protruding feature that has a shape that helps a user hold the game controller more ergonomically. This protrusion helps hold the ring finger of a user at a position further away or out from a center or back portion of the game controller as compared to the pinky of the user. When the user holds the controller, this protrusion helps the user hold the controller in a more relaxed way as a distance between the pinky of the user and the palm of the user would be less than a distance between the ring finger of the user and the palm of the user. This topology more naturally fits the hand of the user and prevents strain. Each of the perspective views of FIG. 20 include trigger assembly/guard 2080.

Notice that portion 2020 may be slanted in an outward direction away from a back portion of the controller. The overall width of the handle may taper to a smaller cross-sectional area at a bottom end of a controller handle. Notice also that portion 2015 includes an edge that reduces a thickness of the controller. Perspective view 2025 illustrates fingers of a user's hand when the user holds the game controller. Perspective view 2025 includes a thumb 2030 of a user, a pinky 2035 of the user, a ring finger 2040 of the user, an index finger 2045, and a middle finger 2050 of the user. Note that the thumb 2030 of the user rests along a back portion of the controller and that pinky 2035 grasps a thinner portion of the game controller than ring finger 2040. Index finger 2045 is located in a position where the user can control an index finger joystick like the index finger joysticks discussed in respect to FIGS 11 & 13. Middle finger 2050 is located in a position where the user can pull a trigger of trigger assembly/guard 2080 as discussed in respect to FIGS 11 & 13.

Perspective views 2055 and 2065 show the game controller from slightly different angles such that the features of the controller can be seen using only a few item numbers. Item numbers of perspective views 2055 and 2065 identify the trigger assembly/guard 2080 and protrusion 2060 from slightly different perspectives.

FIG. 21A illustrates parts that may be included in an index finger joystick assembly. The parts of FIG. 21A are shown in various views or orientations of an index finger joystick of a right-handed game controller. The various views of Fig. 21A include perspective views 2100-1 & 2100-5, top view 2100-2, semi-cross-sectional top views 2100-3 & 2100-8, side views 2100-4 & 2100-7, and front view 2100-6. Each of these different views may include the same parts off the index finger joystick assembly even though each of the view may not include item numbering that identifies a specific part. Each of the different parts may form a portion of an index finger control button.

The different parts included in FIG. 21A are ridge part 2105, top part 2115, bottom part 2120, inside face trigger 2110, and support 2125. Perspective views 2100-1 & 2100-5 illustrate that a person's finger 2130 may be placed onto ridge part 2105 and semi-cross-sectional top view 2100-8 shows that a person's finger 2130 may be placed on top of ridge part 2105 and adjacent to face trigger part 2110. Note that semi-cross-sectional views 2100-3 and 2100-8 depict fact trigger part having a bump like shape.

The ridge part 2105, inside face trigger part may be used by a user to adjust the position of the index finger joystick, top part 2115, and bottom part 2120 along an X axis, a Y axis, or a Z axis. Ridge part 2105 may be used to pull in the index finger joystick as discussed in respect to FIGS 13, 15, & 16. Ridge part 2105 and fact trigger part 2110 may be used to move the index finger joystick to the left or right (along the X axis of FIG. 13). Top part 2115 and bottom part 2120 may be used to move the index finger joystick up or down (along the Y axis of FIG. 13). After an index finger joystick has been moved to a position that a user likes, that index finger joystick may be locked in place. In instances when another user wished to use the controller, this other user could release the lock, readjust the position of the index finger joystick, and the lock the index finger joystick back into the readjusted position.

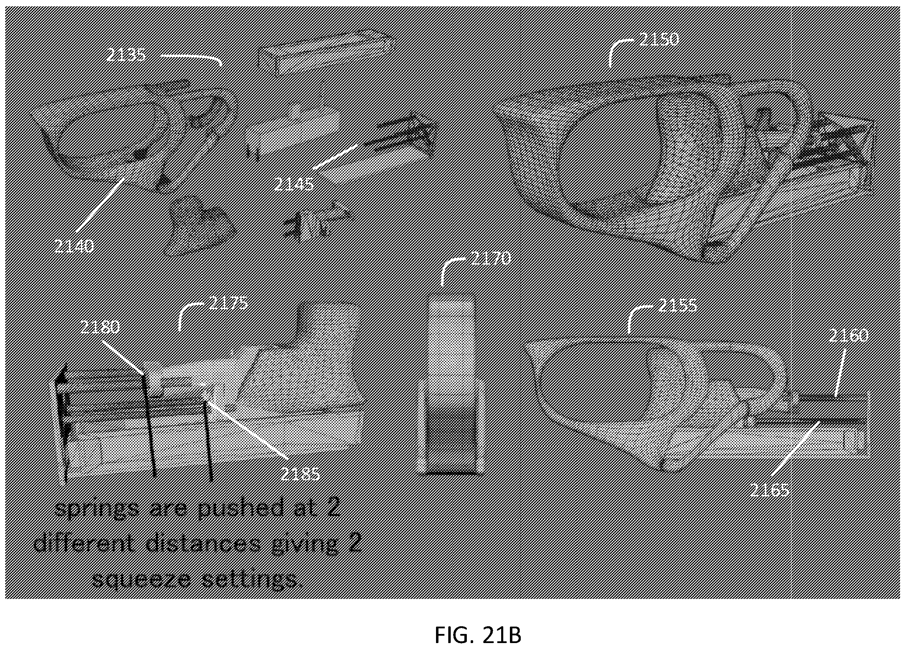

FIG. 21B illustrates several different perspective views of a trigger assembly consistent with the present disclosure. FIG. 21B includes a set of trigger parts 2135, trigger assembly perspective view 2150, trigger assembly side view 2155, trigger assembly head on view 2170, and partial trigger assembly view 2175. The set of trigger parts include trigger guard 2140 and slider portion 2145 that may be used in a trigger assembly. Perspective view 2150 and side view 2155 illustrated different views of a trigger assembly. Side view 2155 include rods or slides 2160 and 2165 that are of different lengths. Head on view 2170 shows an outline of the trigger assembly from a perspective directly in front of the trigger assembly.

Partial trigger assembly view 2175 includes the rods or slides 2160 and 2165 discussed in respect to side view 2155 and includes springs 2180 and 2185 that may be coupled to those springs. These springs 2180 and 2185 are positioned at two different distances and provide the two different squeeze settings discussed in respect to FIG. 13.

One of these springs may be placed toward a front portion of the trigger and the second spring may be placed toward a back portion of the trigger. This may allow the trigger to have two different positions. When depressed to a first position, control electronics of the controller may send a first command to a gaming system and when depressed to a second position, the control electronics may send a second command to the gaming system.

Controllers consistent with the present disclosure may include a wireless interface that allows the controller to communicate with a gaming system or with a drone using wireless communications. Such a controller may communicate using the MAVlink protocol when a drone is controlled via a wireless communication medium. Controllers consistent with the present disclosure may use any standard wireless communication technology known in the art. As such, the MAVlink protocol, a WI-FI protocol, a Bluetooth protocol, or other type of wireless communication technology or protocol may be used.

Controllers consistent with the present disclosure may also include accelerometers that that sense forces in up to three different directions. Controllers or systems that the controllers communicate with may be configured to identify certain types of acceleration profiles and these profiles may be used to identify how effectively a user actually manipulates the controller for a particular purpose. This is because the dynamics of a hammer, an axe, a tennis racket, ping pong racket, a pickle ball racket, a gun, or a sword are completely different. Even the characteristics of a type of sword, such as a Japanese Katana or European Sabre are different from the characteristics of a European Broadsword.

An axe and a European Broadsword are effectively handled using a chopping blunt force motion that are consistent with a first set of acceleration profiles. The Katana and Sabre are not effectively handled using a chopping blunt force action, instead the Katana and Sabre are more effective when a snapping slicing motion is used. A hammer is also more effective when a snapping straight motion is used and is not effective when a blunt force motion is used. Because of this, accelerometers and control electronics that identify differences between different motions that a user uses. These different motions may be identified based on an acceleration profile sensed by sensors at a controller. These acceleration profiles may be used to identify whether the user is handling a particular item appropriately for an application. A gaming program could be configured, for example using a software driver that modifies the operation of a game. Once configured, particular acceleration profiles could be associated with the effective use of a particular tool, weapon, or toy. This would allow a gaming system to identify when a user moves the controller in a fashion that is consistent with how that particular tool, weapon, or toy should be used. A person that uses a hammer using blunt force may not properly strike a nail, where a person that uses the hammer using a straight snapping motion may be able to drive a nail with one stroke. The gaming system could then depict an outcome based on whether the person used the controller in a more or less appropriate manner.

While in certain instances game controllers of the present disclosure may have a bottom portion that is part of or permanently attached to a to portion of the game controller, in other instances such game controllers may include features that are interchangeable in a manner that may update, change, or affect the utility of the game controllers. For example, a game controller may include an interchangeable base/bottom portion (i.e. an interchangeable handle) that may include an arm or wrist rest. Such a base portion may allow the controller stand up when placed on a table. Simply by pressing a release button, a user may release the base portion and replace it with another base portion. A second base portion may simply extend or elongate the handle, where the handle may taper to include a smaller cross-sectional area as the base portion moves to a rounded end. A third base portion may also extend the handle yet include a bulbous weighted portion at a bottom portion of the base portion. Such a weighted base portion would change the center of mass of the game controller. In certain instances, weights may be added to or removed from a base portion to aid in adjusting the center of mass of the controller. Handles of such game controllers may have or include a rounded or oval shape that fits into the hand of a person naturally.

Such game controllers may help prevent or relieve repetitive stress injuries or increase the utility of the game controller in various ways. The arm or wrist rest base portion may allow users to rest their arm to relieve stress. The rounded base portion may allow a user to adapt the controller to have a smaller end, making it easier for users with small hands to grasp the controller. By changing the center of mass of the controller, the weighted base portion could a person to adapt the controller to more naturally be rotated or to make a user feel more comfortable. Other ergonomic features may allow a user to adjust the position of an index finger control

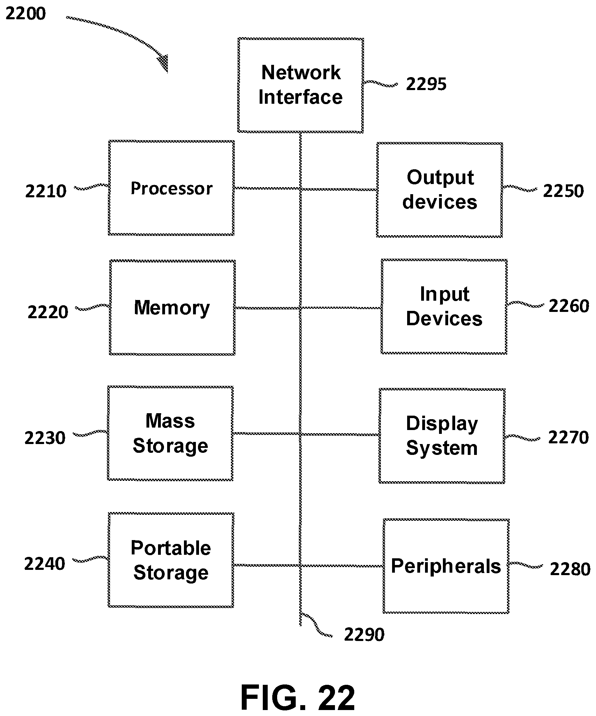

FIG. 22 illustrates a computing system that may be used to implement an embodiment of the present invention. The computing system 2200 of FIG. 22 includes one or more processors 2210 and main memory 2220. Main memory 2220 stores, in part, instructions and data for execution by processor 2210. Main memory 2220 can store the executable code when in operation. The system 2200 of FIG. 22 further includes a mass storage device 2230, portable storage medium drive(s) 2240, output devices 2250, user input devices 2260, a graphics display 2270, peripheral devices 2280, and network interface 2295.

The components shown in FIG. 22 are depicted as being connected via a single bus 2290. However, the components may be connected through one or more data transport means. For example, processor unit 2210 and main memory 2220 may be connected via a local microprocessor bus, and the mass storage device 2230, peripheral device(s) 2280, portable storage device 2240, and display system 2270 may be connected via one or more input/output (I/O) buses.

Mass storage device 2230, which may be implemented with a magnetic disk drive or an optical disk drive, is a non-volatile storage device for storing data and instructions for use by processor unit 2210. Mass storage device 2230 can store the system software for implementing embodiments of the present invention for purposes of loading that software into main memory 2220.

Portable storage device 2240 operates in conjunction with a portable non-volatile storage medium, such as a FLASH memory, compact disk or Digital video disc, to input and output data and code to and from the computer system 2200 of FIG. 22. The system software for implementing embodiments of the present invention may be stored on such a portable medium and input to the computer system 2200 via the portable storage device 2240.

Input devices 2260 provide a portion of a user interface. Input devices 2260 may include an alpha-numeric keypad, such as a keyboard, for inputting alpha-numeric and other information, or a pointing device, such as a mouse, a trackball, stylus, or cursor direction keys. Additionally, the system 2200 as shown in FIG. 22 includes output devices 2250. Examples of suitable output devices include speakers, printers, network interfaces, and monitors.

Display system 2270 may include a liquid crystal display (LCD), a plasma display, an organic light-emitting diode (OLED) display, an electronic ink display, a projector-based display, a holographic display, or another suitable display device. Display system 2270 receives textual and graphical information, and processes the information for output to the display device. The display system 2270 may include multiple-touch touchscreen input capabilities, such as capacitive touch detection, resistive touch detection, surface acoustic wave touch detection, or infrared touch detection. Such touchscreen input capabilities may or may not allow for variable pressure or force detection.

Peripherals 2280 may include any type of computer support device to add additional functionality to the computer system. For example, peripheral device(s) 2280 may include a modem or a router.

Network interface 2295 may include any form of computer interface of a computer, whether that be a wired network or a wireless interface. As such, network interface 2295 may be an Ethernet network interface, a BlueTooth^{™} wireless interface, an 802.11 interface, or a cellular phone interface.

The components contained in the computer system 2200 of FIG. 22 are those typically found in computer systems that may be suitable for use with embodiments of the present invention and are intended to represent a broad category of such computer components that are well known in the art. Thus, the computer system 2200 of FIG. 22 can be a personal computer, a hand held computing device, a telephone ("smart" or otherwise), a mobile computing device, a workstation, a server (on a server rack or otherwise), a minicomputer, a mainframe computer, a tablet computing device, a wearable device (such as a watch, a ring, a pair of glasses, or another type of jewelry/clothing/accessory), a video game console (portable or otherwise), an e-book reader, a media player device (portable or otherwise), a vehicle-based computer, some combination thereof, or any other computing device. The computer can also include different bus configurations, networked platforms, multi-processor platforms, etc. The computer system 2200 may in some cases be a virtual computer system executed by another computer system. Various operating systems can be used including Unix, Linux, Windows, Macintosh OS, Palm OS, Android, iOS, and other suitable operating systems.

The present invention may be implemented in an application that may be operable using a variety of devices. Non-transitory computer-readable storage media refer to any medium or media that participate in providing instructions to a central processing unit (CPU) for execution. Such media can take many forms, including, but not limited to, non-volatile and volatile media such as optical or magnetic disks and dynamic memory, respectively. Common forms of non-transitory computer-readable media include, for example, FLASH memory, a flexible disk, a hard disk, magnetic tape, any other magnetic medium, a CD-ROM disk, digital video disk (DVD), any other optical medium, RAM, PROM, EPROM, a FLASH EPROM, and any other memory chip or cartridge.

The present invention may be implemented in an application that may be operable using a variety of devices. Non-transitory computer-readable storage media refer to any medium or media that participate in providing instructions to a central processing unit (CPU) for execution. Such media can take many forms, including, but not limited to, non-volatile and volatile media such as optical or magnetic disks and dynamic memory, respectively. Common forms of non-transitory computer-readable media include, for example, a floppy disk, a flexible disk, a hard disk, magnetic tape, any other magnetic medium, a CD-ROM disk, digital video disk (DVD), any other optical medium, RAM, PROM, EPROM, a FLASH EPROM, and any other memory chip or cartridge.

While various flow diagrams provided and described above may show a particular order of operations performed by certain embodiments of the invention, it should be understood that such order is exemplary (e.g., alternative embodiments can perform the operations in a different order, combine certain operations, overlap certain operations, etc.).

The foregoing detailed description of the technology herein has been presented for purposes of illustration and description. It is not intended to be exhaustive or to limit the technology to the precise form disclosed. Many modifications and variations are possible in light of the above teaching. The described embodiments were chosen in order to best explain the principles of the technology and its practical application to thereby enable others skilled in the art to best utilize the technology in various embodiments and with various modifications as are suited to the particular use contemplated. It is intended that the scope of the present invention be defined by the claims.

## Claims

1. A controller (100) comprising:
a grip framework that contains various input components;
a thumb-stick configured on a top portion (120) of the grip framework, the thumb-stick operable to be controlled by a user's thumb;
an analog stick configured on a front portion of the grip framework, the analog stick configured to be operated by a user's index finger and configured in a box cage, wherein the user's index finger can control the box cage containing the analog stick backwards relative to the grip framework to control a z axis movement, in a z axis, of a virtual object or a physical object, and wherein the analog stick can be manipulated to control movement in an x and a y axis of the virtual object or the physical object; and
a trigger configured on the front portion of the grip framework, wherein the trigger is configured to be operated by a middle finger of the user's hand.

2. The controller (100) of claim 1, wherein the box cage is adjustable along a Z axis aligned in the backwards direction relative to the grip framework before the box cage is locked into place.

3. The controller (100) of claim 1, wherein the controller further comprises a communication component for communicating with and controlling a movement of the virtual object or the physical object.

4. The controller (100) of claim 1, wherein the box cage is adjustable along an X axis aligned in a leftwards direction relative to the grip framework before the box cage is locked in place.

5. The controller (100) of claim 1, further comprising:
at least one button configured on a top portion of the grip framework, wherein each of the at least one button has a button surface that is cupped inwardly to provide more surface area for the at least one button and wherein each of the at least one button is reachable from a user's thumb.

6. The controller (100) of claim 1, wherein the trigger and the analog stick are configured such that users cannot use the trigger or the analog stick to hold the controller.

7. The controller (100) of claim 6, wherein a lower portion of the grip framework comprises components that are configured to be complementary to one or more of a pinky finger and a ring finger of the user.

8. The controller (100) of claim 7, wherein the box cage is adjustable along a Υ axis aligned in an upwards direction relative to the grip framework before the box cage is locked in place.

9. The controller (100) of claim 1, wherein the box cage, when unlocked from a first position, is movable into a second position where the box cage is relocked.

10. The controller (100) of claim 1, wherein the box cage comprises a first set of parts configured to move relative to a second set of parts until the first set of parts reaches a first position and the second set of parts to move along with the first set of parts after the first set of parts reaches the first position.

11. A pair of controllers, the pair of controllers comprising:
a first controller, the first controller being a controller (100) as defined in claim 1; and
a second controller comprising:
a second grip framework that contains various input components;
a second thumb-stick configured on a top portion of the second grip framework, the second thumb-stick operable to be controlled by a user's thumb;
a second analog stick configured on a second front portion of the second grip framework, the second analog stick configured to be operated by a user's index finger of a second hand of the user and configured in a second box cage, wherein the user's index finger of the second user's hand can control the second box cage containing the second analog stick backwards relative to the second grip framework to control a z axis movement, in a z axis, of a second virtual object or a second physical object, and wherein the second analog stick can be manipulated to control movement in an x and a y axis of the second virtual object or the second physical object; and
a second trigger configured on the second front portion of the second grip framework, wherein the second trigger is configured to be operated by a middle finger of the second user's hand, and wherein the first controller is a mirror structure of the second controller.

12. The pair of controllers of claim 11, wherein the pair of controllers is configured to enable a user to aim two different objects simultaneously using one or more of the first analog stick and the second analog stick.

13. The pair of controllers of claim 11, wherein the pair of controllers is configured to enable a user to control two different objects simultaneously using one or more of the first analog stick and the second analog stick.

14. The pair of controllers of claim 13, wherein the two different objects comprise at least one of the virtual object and the physical object.

15. The pair of controllers of claim 11, wherein the pair of controllers is configured to enable a user to define a cutting plane of a cutting implement using one or more of the first analog stick and the second analog stick or to enable a user to provide third person over a shoulder control using one or more of the first analog and the second analog stick in which a camera angle is used behind a first person's view.

## Patentansprüche

1. Controller (100), der Folgendes umfasst:
ein Griffgerüst, das verschiedene Eingabekomponenten enthält,
einen Daumenstick, der an einem oberen Abschnitt (120) des Griffgerüsts konfiguriert ist, wobei der Daumenstick funktionsfähig ist, um durch den Daumen eines Benutzers gesteuert zu werden,
einen Analogstick, der an einem vorderen Abschnitt des Griffgerüsts konfiguriert ist, wobei der Analogstick dafür konfiguriert ist, durch den Zeigefinger eines Benutzers betätigt zu werden, und in einem Gehäusekäfig konfiguriert ist, wobei der Zeigefinger des Benutzers den Gehäusekäfig, der den Analogstick enthält, nach hinten im Verhältnis zu dem Griffgerüst steuern kann, um eine z-Achsen-Bewegung, in einer z-Achse, eines virtuellen Objekts oder eines physischen Objekts zu steuern, und wobei der Analogstick manipuliert werden kann, um eine Bewegung in einer x- und einer y-Achse des virtuellen Objekts oder des physischen Objekts zu steuern, und
einen Auslöser, der an dem vorderen Abschnitt des Griffgerüsts konfiguriert ist, wobei der Auslöser dafür konfiguriert ist, durch einen Mittelfinger der Hand des Benutzers betätigt zu werden.

2. Controller (100) nach Anspruch 1, wobei der Gehäusekäfig entlang einer Z-Achse, die in der Rückwärtsrichtung im Verhältnis zu dem Griffgerüst ausgerichtet ist, einstellbar ist, bevor der Gehäusekäfig am Platz verriegelt wird.

3. Controller (100) nach Anspruch 1, wobei der Controller ferner eine Kommunikationskomponente zum Kommunizieren mit dem virtuellen Objekt oder dem physischen Objekt und Steuern einer Bewegung desselben umfasst.

4. Controller (100) nach Anspruch 1, wobei der Gehäusekäfig entlang einer X-Achse, die in einer Richtung nach links im Verhältnis zu dem Griffgerüst ausgerichtet ist, einstellbar ist, bevor der Gehäusekäfig am Platz verriegelt wird.

5. Controller (100) nach Anspruch 1, der ferner Folgendes umfasst:
mindestens einen Knopf, der an einem oberen Abschnitt des Griffgerüsts konfiguriert ist, wobei jeder von dem mindestens einen Knopf eine Knopfoberfläche aufweist, die nach innen schalenförmig ist, um mehr Oberfläche für den mindestens einen Knopf bereitzustellen, und wobei jeder von dem mindestens einen Knopf vom Daumen eines Benutzers erreichbar ist.

6. Controller (100) nach Anspruch 1, wobei der Auslöser und der Analogstick derart konfiguriert sind, dass die Benutzer den Auslöser oder den Analogstick nicht benutzen können, um den Controller zu halten.

7. Controller (100) nach Anspruch 6, wobei ein unterer Abschnitt des Griffgerüsts Komponenten umfasst, die dafür konfiguriert sind, komplementär zu einem oder mehreren von einem kleinen Finger und einem Ringfinger des Benutzers zu sein.

8. Controller (100) nach Anspruch 7, wobei der Gehäusekäfig entlang einer Y-Achse, die in einer Aufwärtsrichtung im Verhältnis zu dem Griffgerüst ausgerichtet ist, einstellbar ist, bevor der Gehäusekäfig am Platz verriegelt wird.

9. Controller (100) nach Anspruch 1, wobei der Gehäusekäfig, wenn er aus einer ersten Position entriegelt ist, in eine zweite Position beweglich ist, wo der Gehäusekäfig erneut verriegelt wird.

10. Controller (100) nach Anspruch 1, wobei der Gehäusekäfig einen ersten Satz von Teilen umfasst, die dafür konfiguriert sind, sich im Verhältnis zu einem zweiten Satz von Teilen zu bewegen, bis der erste Satz von Teilen eine erste Position erreichen, und der zweite Satz von Teilen sich zusammen mit dem ersten Satz von Teilen bewegen soll, nachdem der erste Satz von Teilen die erste Position erreicht haben.

11. Paar von Controllern, wobei das Paar von Controllern Folgendes umfasst:
einen ersten Controller, wobei der erste Controller ein Controller (100) nach Anspruch 1 ist, und
einen zweiten Controller, der Folgendes umfasst:
ein zweites Griffgerüst, das verschiedene Eingabekomponenten enthält,
eine zweiten Daumenstick, der an einem oberen Abschnitt des zweiten Griffgerüsts konfiguriert ist, wobei der zweite Daumenstick funktionsfähig ist, um durch den Daumen eines Benutzers gesteuert zu werden,
einen zweiten Analogstick, der an einem zweiten vorderen Abschnitt des zweiten Griffgerüsts konfiguriert ist, wobei der zweite Analogstick dafür konfiguriert ist, durch den Zeigefinger eines Benutzers einer zweiten Hand des Benutzers betätigt zu werden, und in einem zweiten Gehäusekäfig konfiguriert ist, wobei der Zeigefinger des Benutzers der zweiten Hand des Benutzers den zweiten Gehäusekäfig, der den zweiten Analogstick enthält, nach hinten im Verhältnis zu dem zweiten Griffgerüst steuern kann, um eine z-Achsen-Bewegung, in einer z-Achse, eines zweiten virtuellen Objekts oder eines zweiten physischen Objekts zu steuern, und wobei der zweite Analogstick manipuliert werden kann, um eine Bewegung in einer x- und einer y-Achse des zweiten virtuellen Objekts oder des zweiten physischen Objekts zu steuern, und
einen zweiten Auslöser, der an dem zweiten vorderen Abschnitt des zweiten Griffgerüsts konfiguriert ist, wobei der zweite Auslöser dafür konfiguriert ist, durch einen Mittelfinger der zweiten Hand des Benutzers betätigt zu werden, und wobei der erste Controller eine Spiegelstruktur des zweiten Controllers ist.

12. Paar von Controllern nach Anspruch 11, wobei das Paar von Controllern dafür konfiguriert ist, es einem Benutzer zu ermöglichen, unter Verwendung eines oder mehrerer von dem ersten Analogstick und dem zweiten Analogstick gleichzeitig zwei unterschiedliche Objekte anzuvisieren.

13. Paar von Controllern nach Anspruch 11, wobei das Paar von Controllern dafür konfiguriert ist, es einem Benutzer zu ermöglichen, unter Verwendung eines oder mehrerer von dem ersten Analogstick und dem zweiten Analogstick gleichzeitig zwei unterschiedliche Objekte zu steuern.

14. Paar von Controllern nach Anspruch 13, wobei die zwei unterschiedlichen Objekte mindestens eines von dem virtuellen Objekt und dem physischen Objekt umfassen.

15. Paar von Controllern nach Anspruch 11, wobei das Paar von Controllern dafür konfiguriert ist, es einem Benutzer zu ermöglichen, unter Verwendung eines oder mehrerer von dem ersten Analogstick und dem zweiten Analogstick eine Schnittebene eines Schneidwerkzeugs zu definieren, oder es einem Benutzer zu ermöglichen, unter Verwendung eines oder mehrerer von dem ersten Analogstick und dem zweiten Analogstick einen Controller über die Schulter einer dritten Person bereitzustellen, wobei ein Kamerawinkel hinter der Sicht einer ersten Person verwendet wird.

## Revendications

1. Manette (100) comprenant :
une structure de préhension qui contient divers composants d'entrée ;
un stick de pouce configuré sur une partie supérieure (120) de la structure de préhension, le stick de pouce étant utilisable pour être commandé par le pouce d'un utilisateur ;
un stick analogique configuré sur une partie avant de la structure de préhension, le stick analogique étant configuré pour être actionné par l'index d'un utilisateur et configuré dans une cage de logement, dans laquelle l'index de l'utilisateur peut commander la cage de logement contenant le stick analogique vers l'arrière par rapport à la structure de préhension pour commander un mouvement sur l'axe z, dans un axe z, d'un objet virtuel ou d'un objet physique, et dans laquelle le stick analogique peut être manipulé pour commander un mouvement sur un axe x et y de l'objet virtuel ou de l'objet physique ; et
une gâchette configurée sur la partie avant de la structure de préhension, dans laquelle la gâchette est configurée pour être actionnée par un majeur de la main de l'utilisateur.

2. Manette (100) selon la revendication **1,** dans laquelle la cage de logement est réglable le long d'un axe Z aligné dans la direction arrière par rapport à la structure de préhension avant que la cage de logement soit verrouillée en place.

3. Manette (100) de la revendication **1,** dans laquelle la manette comprend en outre un composant de communication pour communiquer avec l'objet virtuel ou l'objet physique et en commander le mouvement.

4. Manette (100) selon la revendication **1,** dans laquelle la cage de logement est réglable le long d'un axe X aligné dans une direction gauche par rapport à la structure de préhension avant que la cage de logement soit verrouillée en place.

5. Manette (100) selon la revendication **1,** comprenant en outre :
au moins un bouton configuré sur une partie supérieure de la structure de préhension, dans laquelle chacun de l'au moins un bouton a une surface de bouton qui est bombée vers l'intérieur pour fournir davantage de surface pour l'au moins un bouton et dans laquelle chacun de l'au moins un bouton est accessible par le pouce d'un utilisateur.

6. Manette (100) selon la revendication **1,** dans laquelle la gâchette et le stick analogique sont configurés de sorte que les utilisateurs ne puissent pas utiliser la gâchette ou le stick analogique pour tenir la manette.

7. Manette (100) selon la revendication 6, dans laquelle une partie inférieure de la structure de préhension comprend des composants qui sont configurés pour être complémentaires à un ou plusieurs parmi un auriculaire et un annulaire de l'utilisateur.

8. Manette (100) selon la revendication 7, dans laquelle la cage de logement est réglable le long d'un axe Y aligné dans une direction vers le haut par rapport à la structure de préhension avant que la cage de logement soit verrouillée en place.

9. Manette (100) selon la revendication **1,** dans laquelle la cage de logement, lorsqu'elle est déverrouillée à partir d'une première position, est mobile dans une deuxième position où la cage de logement est verrouillée à nouveau.

10. Manette (100) selon la revendication **1,** dans laquelle la cage de logement comprend un premier ensemble de pièces configurées pour se déplacer par rapport à un deuxième ensemble de pièces jusqu'à ce que le premier ensemble de pièces atteigne une première position et le deuxième ensemble de pièces doit se déplacer avec le premier ensemble de pièces après que le premier ensemble de pièces ont atteint la première position.

11. Paire de manettes, la paire de manettes comprenant :
une première manette, la première manette étant une manette (100) telle que définie à la revendication 1 ; et
une deuxième manette comprenant :
une deuxième structure de préhension qui contient divers composants d'entrée ;
un deuxième stick de pouce configuré sur une partie supérieure de la deuxième structure de préhension, le deuxième stick de pouce étant utilisable pour être commandé par le pouce d'un utilisateur ;
un deuxième stick analogique configuré sur une deuxième partie avant de la deuxième structure de préhension, le deuxième stick analogique étant configuré pour être actionné par l'index d'un utilisateur d'une deuxième main de l'utilisateur et configuré dans une deuxième cage de logement, dans laquelle l'index de l'utilisateur de la deuxième main de l'utilisateur peut commander la deuxième cage de logement contenant le deuxième stick analogique vers l'arrière par rapport à la deuxième structure de préhension pour commander un mouvement sur l'axe z, dans un axe z, d'un deuxième objet virtuel ou d'un deuxième objet physique, et dans laquelle le deuxième stick analogique peut être manipulé pour commander un mouvement sur un axe x et y du deuxième objet virtuel ou du deuxième objet physique ; et
une deuxième gâchette configurée sur la deuxième partie avant de la deuxième structure de préhension, dans laquelle la deuxième gâchette est configurée pour être actionnée par un majeur de la deuxième main de l'utilisateur, et dans laquelle la première manette est une structure miroir de la deuxième manette.

12. Paire de manettes selon la revendication 11, dans laquelle la paire de manettes est configurée pour permettre à un utilisateur de viser simultanément deux objets différents en utilisant un ou plusieurs du premier stick analogique et du deuxième stick analogique.

13. Paire de manettes selon la revendication 11, dans laquelle la paire de manettes est configurée pour permettre à un utilisateur de commander simultanément deux objets différents en utilisant un ou plusieurs du premier stick analogique et du deuxième stick analogique.

14. Paire de manettes selon la revendication 13, dans laquelle les deux objets différents comprennent au moins un de l'objet virtuel et de l'objet physique.

15. Paire de manettes selon la revendication 11, la paire de manettes étant configurée pour permettre à un utilisateur de définir un plan de coupe d'un équipement de coupe en utilisant un ou plusieurs du premier stick analogique et du deuxième stick analogique ou pour permettre à un utilisateur de fournir à un troisième personne une commande par-dessus une épaule en utilisant un ou plusieurs du premier stick analogique et du deuxième stick analogique, un angle de caméra étant utilisé derrière la vue d'une première personne.
